# EUROPÄISCHE PATENTANMELDUNG

(11) **EP 3 050 732 A1**
(43) Veröffentlichungstag der Anmeldung: **03.08.2016**
(21) Anmeldenummer: 16000146.7
(22) Anmeldetag: 21.01.2016
(51) Int. Cl.: B60K 1/04, B60K 1/00, H01M 8/04119, B60K 15/063, B60K 15/03

(54) **SAMMELBEHÄLTER, INSBESONDERE FÜR EINE BRANDGEFÄHRDETE UND/ODER EXPLOSIONSGEFÄHRDETE UMGEBUNG**

(30) Priorität: 29.01.2015 DE 102015001108
(71) Anmelder: Linde Aktiengesellschaft, 80331 München (DE)
(72) Erfinder: Adler, Robert, 2201 Gerasdorf (AT); Klein, Ekkehardt, 3434 Katzelsdorf (AT); Nagl, Christoph, 2534 Alland (AT); Pollak, Andreas, 1160 Wien (AT); Muchitsch, Werner, 2344 Maria Enzersdorf (AT)

(57) **Zusammenfassung**

Die Erfindung betrifft einen Sammelbehälter (1), insbesondere für eine brandgefährdete und/oder explosionsgefährdete Umgebung, aufweisend zumindest die folgenden Komponenten: eine Sammelkammer (2) zur Aufnahme einer zu sammelnden Flüssigkeit (3) mit einem Kondensateinlass (18) für die Flüssigkeit (3); und eine Saugöffnung (4) zum Abführen der Flüssigkeit (3) aus der Sammelkammer (2). Erfindungsgemäß sind zumindest die weiteren folgenden Komponenten vorgesehen: eine Venturi-Düse (5), die in kommunizierender Strömungsverbindung mit der Saugöffnung (4) steht, so dass mittels der Venturi-Düse (5) ein Unterdruck in der Saugöffnung (4) erzeugbar ist; ein Druckmediumeinlass (6) für ein Druckmedium (7), der stromaufwärts der Venturi-Düse (5) angeordnet ist und in kommunizierender Strömungsverbindung mit der Venturi-Düse (5) steht, so dass ein Unterdruck in der Saugöffnung (4) erzeugbar ist, wenn ein Druckmedium (7) über den Druckmediumeinlass (6) durch die Venturi-Düse (5) gegeben wird; und ein Entnahmeauslass (8) stromabwärts der Venturi-Düse (5), der in kommunizierender Strömungsverbindung mit der Venturi-Düse (5) sowie mit der Saugöffnung (4) steht, so dass die Flüssigkeit (3) über den Entnahmeauslass (8) aus der Sammelkammer (2) abziehbar ist. Weiterhin betrifft die Erfindung ein entsprechendes Verfahren sowie ein wasserstoffbetriebenes Fahrzeug.

## Beschreibung

Die Erfindung betrifft einen Sammelbehälter, insbesondere für eine brandgefährdete und/oder explosionsgefährdete Umgebung, ein Verfahren zum Entleeren eines solchen Sammelbehälters sowie ein wasserstoffbetriebenes Fahrzeug.

Bei vielen brandgefährdeten und/oder explosionsgefährdeten Umgebungen eines Prozesses fallen Kondensate an, welche gesammelt werden sollen, um nicht die Umgebung zu verunreinigen beziehungsweise zu gefährden und/oder um das Kondensat für andere Prozesse als Rohstoff verfügbar zu machen. Beispielsweise werden vermehrt elektrische Flurfördermittel mit Brennstoffzellen eingesetzt, welche bevorzugt mit Wasserstoff (H₂) betankt werden, wobei in der Brennstoffzelle in bekannter Weise aus Wasserstoff mit Sauerstoff Antriebsenergie erzeugt wird, wobei Wasser erzeugt wird. Wegen des Unfallrisikos und möglichen Verunreinigungen, die zu vermeiden sind, soll das anfallende Wasser nicht auf den Boden gelangen und wird in Sammelbehältern gesammelt. Eine andere beispielhafte Problematik ist bei einer Druck-Kältetrocknung für zum Beispiel Erdgas gegeben, wobei Kondensat anfällt, welches ein Gemisch aus Wasser, Ligroin und Benzol ist. Dieses Gemisch ist hochentzündlich und hochexplosiv. Hier liegt eine sogenannte Ex-Zone 0 vor (Explosionsschutzzone Stufe 0). Bei einem wasserstoffbetriebenen Fahrzeug beziehungsweise dessen Sammelbehältern liegt eine Ex-Zone 2 vor. In beiden diesen Gefahrenzonen werden besondere Anforderungen an mechanisches Equipment gestellt. Für Flurfördermittel werden derzeit integrierte Saugpumpen mit ATEX-Zertifizierung (nach der europäischen ATEX-Betriebsrichtlinie 1999/92/EG; ATEX - atmosphere explosibles) und mit Trockenlaufschutz eingesetzt. Das bedeutet zum einen, dass die Vorrichtung teuer ist und zum anderen ein völliges Leerpumpen des Sammelbehälters vermieden werden muss, um die Saugpumpe nicht zu beschädigen. Für eine Ex-Zone 0 sind so gut wie keine Pumpen bekannt.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die der Erfindung zu Grunde liegende Aufgabe wird gemäß einem Aspekt der Erfindung dadurch gelöst, dass ein Sammelbehälter, insbesondere für eine brandgefährdete und/oder explosionsgefährdete Umgebung geschaffen wird, welcher zumindest die folgenden Komponenten aufweist:
- eine Sammelkammer zur Aufnahme einer zu sammelnden Flüssigkeit mit einem Kondensateinlass für eine Flüssigkeit;
- eine Saugöffnung zum Abführen der Flüssigkeit aus der Sammelkammer. Der Sammelbehälter ist vor allem dadurch gekennzeichnet, dass weiterhin zumindest die folgenden Komponenten vorgesehen sind:
- eine Venturi-Düse in kommunizierender Strömungsverbindung mit der Saugöffnung, so dass infolge eines erzeugten Unterdrucks in der Venturi-Düse ein Unterdruck in der Saugöffnung erzeugbar ist;
- ein Druckmediumeinlass für ein Druckmedium, der stromauf der Venturi-Düse angeordnet ist und in kommunizierender Strömungsverbindung mit der Venturi-Düse steht, so dass in der Venturi-Düse ein Unterdruck erzeugt wird, wenn ein Druckmedium über den Druckmediumeinlass in die Venturi-Düse eingeleitet wird und die Venturi-Düse (insbesondere an der Saugöffnung vorbei) durchströmt,
- ein Entnahmeauslass stromabwärts der Venturi-Düse, der in kommunizierender Strömungsverbindung mit der Venturi-Düse sowie mit der mindestens einen Saugöffnung steht und zur Entnahme der Flüssigkeit aus der mindestens einen Sammelkammer dient.

Der hier vorgeschlagene Sammelbehälter ist sowohl für einen mobilen Einsatz als auch für einen immobilen Einsatz geeignet und dazu eingerichtet, ein (bevorzugt teilweise flüssiges) Medium zu sammeln, welches zum Beispiel als Kondensat oder Abfallprodukt bei einem Prozess anfällt. Beispielsweise ist der Sammelbehälter ein Kondensattank für ein brennstoffzellengetriebenes Fahrzeug oder für einen Druckkälteprozess. Die Einrichtung zum Sammeln der Flüssigkeit ist eine Sammelkammer, welche bevorzugt allseitig geschlossen ist, aber auch zum Beispiel topfartig oben offen sein kann. Die geschlossene Form bietet sich insbesondere für den mobilen Einsatz wegen der besseren Auslaufsicherheit an sowie bei Gefahrenstoffen zur Sicherung gegen Verflüchtigung des Kondensats als (entzündliches und/oder explosives) Luft-Gasgemisch.

In der Sammelkammer ist eine Saugöffnung vorgesehen, welche als Öffnung in einer Wandung der Sammelkammer vorgesehen sein kann oder sich zum Beispiel schlauch- oder leitungsförmig von einem oberen Abschnitt der Sammelkammer, bezogen auf das Schwerefeld der Erde, in einen unteren Abschnitt, bevorzugt nahe bei dem tiefsten Punkt der Sammelkammer, erstreckt. Die Saugöffnung ist kommunizierend in Strömungsverbindung mit einer Venturi-Düse angeordnet, wobei die Saugöffnung bevorzugt seitlich zu einem Strömungskanal der Venturi-Düse vorgesehen ist, und zwar bevorzugt im Bereich einer engsten Stelle, insbesondere an der engsten Stelle, des Querschnitts der Venturi-Düse bzw. des Strömungskanals. Hierdurch wird in der zur Saugöffnung führenden Leitung bzw. an der Saugöffnung (z.B. wenn keine Leitung vorgesehen ist) ein Unterdruck erzeugt, wenn die Venturi-Düse von einem Fluid bzw. dem Druckmedium durchströmt wird.

Venturi-Düsen sind aus dem Stand der Technik bekannt und kennzeichnen sich vor allem durch eine Querschnittsverengung sowie insbesondere eine sich anschließende Querschnittserweiterung ihres Strömungskanals (z.B. ein Rohrabschnitt), so dass im Bereich des engsten Querschnitts des Strömungskanals eine Beschleunigung des durchströmenden Druckmediums bzw. Fluides, in der Regel ein Gas (wie z.B. Druckluft), erzwungen wird und entsprechend ein Unterdruck erzeugt wird. In dieses Unterdruckgebiet im Strömungskanal mündet bevorzugt die Saugöffnung. Weiterhin ist ein Druckmediumeinlass vorgesehen, über welchen eine Druckmediumquelle mit der Venturi-Düse verbindbar ist, so dass ein Druckmedium (vorzugsweise Druckluft) in die Venturi-Düse bzw. in den Strömungskanal einleitbar ist. Der Druckmediumeinlass kann als ein standardisierter Druckluftanschluss ausgebildet sein, wie er in vielen Fertigungsbereichen vorliegt. Es sind aber auch andere Druckmedien, zum Beispiel (druckbeaufschlagtes) Wasser, einsetzbar, wobei bevorzugt ein (ungefährliches) Gas verwendet wird, welches nicht gesammelt werden muss, sondern an die Umgebung abgegeben werden kann. So bieten sich hierfür insbesondere Inertgase wie Stickstoff an.

Bevorzugt ist eine Mehrzahl an Venturi-Düsen vorgesehen, wobei die Venturi-Düsen bevorzugt parallel geschaltet sind. Hierbei sind die einzelnen Druckmediumeinlässe zu einem Haupteinlass zusammengeführt, der auf die einzelnen Druckmediumeinlässe der einzelnen Venturi-Düsen verzweigt und mit diesen jeweils in Strömungsverbindung steht. Die Entnahmeauslässe der einzelnen Venturi-Düsen sind zu einem Hauptauslass zusammengeführt, über den das Druckmedium zusammen mit der Flüssigkeit abführbar ist.

Aufgrund der Venturi-Düse ist die Flüssigkeit absaugbar, ohne dass hierzu mechanische Bauteile in der Region der Sammelkammer (Gefahrenzone), also Bauteile mit Relativbewegung vorgesehen sind, welche potenziell eine Entzündung und/oder Explosion auslösende Wärme erzeugen können.

Zudem funktioniert die Venturi-Düse unabhängig von dem abzusaugenden Fluid, sodass ein Trockenlaufschutz nicht notwendig ist. Ein solcher Sammelbehälter ist daher sogar in einer Ex-Zone 0 einsetzbar, aber auch für andere Bereiche, bei denen zum Beispiel Druckluft vorliegt, als Entleerungsmechanismus besonders geeignet.

Gemäß einer weiteren vorteilhaften Ausführungsform des Sammelbehälters ist zum Öffnen/Schließen des Druckmediumeinlasses ein pneumatisches Ventil vorgesehen.

Gemäß einem weiteren Aspekt der Erfindung wird ein Verfahren zum Entleeren eines Sammelbehälters, insbesondere in einer brandgefährdeten und/oder explosionsgefährdeten Umgebung beschrieben, wobei ein Druckmedium über den Druckmediumeinlass in die Venturi-Düse eines erfindungsgemäßen Sammelbehälters eingeleitet wird, wobei die Flüssigkeit aus dem Sammelbehälter über die Saugöffnung durch die Venturi-Düse hindurch abgesaugt wird und zusammen mit dem Druckmedium über den Entnahmeauslass abgeführt wird. Bei dem Druckmedium handelt es sich bevorzugt um Druckluft.

Das Verfahren kennzeichnet sich vor allem dadurch, dass es in einer Ex-Zone 0 einsetzbar ist, weil hierbei keine reibenden mechanischen Teile im Bereich der Ex-Zone vorgesehen sind. Darüber hinaus ist es nicht nötig, einen Trockenlaufschutz beziehungsweise ein Verfahren zum Schutz vor Trockenlaufen vorzusehen. Bei dem erfindungsgemäßen Verfahren wird insbesondere das Druckmedium durch den Strömungskanal der Venturi-Düse geführt, und zwar an der Saugöffnung vorbei, wobei ein Unterdruck im Bereich der Saugöffnung beziehungsweise in einer strömungstechnischen Verbindung der Sammelkammer mit der Saugöffnung erzeugt wird. Damit wird über die Saugöffnung die Flüssigkeit (z.B. Wasser) aus dem Sammelbehälter abgesaugt und zusammen mit dem Druckmedium über den Entnahmeauslass abgeführt.

Gemäß einer weiteren vorteilhaften Ausführungsform des Verfahrens wird das Absaugen nach Erfüllen zumindest einer der folgenden Bedingungen beendet:
- Erreichen einer vorbestimmten Zeitdauer der Absaugung nach Beginn des Betreibens der Venturi-Düse;
- Beendigung eines weiteren Vorgangs, bevorzugt eines Tankvorgangs;
- Erreichen einer vorbestimmten abzuführenden Flüssigkeitsmenge.

Gemäß einer weiteren vorteilhaften Ausführungsform des Verfahrens wird gleichzeitig zum Entleeren des Sammelbehälters zumindest ein mobiler Wasserstoffspeicher mit Wasserstoff befüllt. Bei dieser bevorzugten Ausführungsform wird das Absaugen der Flüssigkeit mit einem Tankvorgang eines Wasserstoffspeichers kombiniert, so dass kein zusätzlicher Zeitaufwand für die Entnahme aus dem Sammelbehälter anfällt. Ganz besonders bevorzugt wird hierzu eine gemeinsame Tankeinrichtung eingesetzt, welche die Anschlüsse für eine Betankung, eine Druckmediumversorgung und eine Entnahme umfasst, so dass keine zusätzlichen Handgriffe notwendig sind, um gleichzeitig zum Befüllen des Wasserstoffspeichers den Sammelbehälter zu entleeren.

Gemäß einem weiteren Aspekt der Erfindung wird ein wasserstoffbetriebenes Fahrzeug offenbart, welches zumindest die folgenden Komponenten aufweist:
- einen Wasserstoffspeicher zum Speichern von Wasserstoff;
- einen Reaktor, insbesondere in Form einer Brennstoffzelle, zum Erzeugen von Antriebsenergie für das Fahrzeug unter Verwendung von Wasserstoff und Sauerstoff sowie unter Erzeugung von Wasser; und
- einen erfindungsgemäßen Sammelbehälter zum Sammeln des erzeugten Wassers.

Hier wird ein wasserstoffbetriebenes Fahrzeug, besonders bevorzugt ein Flurfördermittel (z.B. Gabelstapler) mit Brennstoffzelle vorgeschlagen, wobei das anfallende Wasser mit Vorteil in einem Sammelbehälter aufgefangen wird, sodass kein Wasser am Fahrzeug bzw. Flurfördermittel austritt, welches eine reduzierte Bodenhaftung und/oder eine Verunreinigung des Bodens verursachen könnte. Der Sammelbehälter ist insbesondere gemäß einer der oben beschriebenen Ausführungsformen ausgebildet. Weiterhin kann, insbesondere unabhängig von einem Füllgrad des Sammelbehälters, ein erfindungsgemäßes Verfahren zum Entleeren des Sammelbehälters durchgeführt werden.

Ganz besonders bevorzugt wird das Entleeren des Sammelbehälters bei einem Tankvorgang des Fahrzeuges vorgenommen, indem eine gemeinsame Tankeinrichtung gemäß der obigen Beschreibung eingesetzt wird, bei der ein Befüllen des Wasserstoffspeichers mit Wasserstoff zugleich mit einem Entleeren des Sammelbehälter kombiniert ist.

Das erfindungsgemäße Prinzip der Absaugung mittels Venturi-Düse kann auch für die Entleerung von Sammelbehältern für brennbare Flüssigkeiten verwendet werden.

Insbesondere zum Absaugen eines bei einer Druck-Kältetrocknung von Erdgas in einem Sammelbehälter anfallenden Kondensats, bei dem es sich um ein Gemisch aus Wasser, Ligroin und Benzol, handelt. Hier liegt im Regelfall eine Ex-Zone 0 vor, so dass hier das erfindungsgemäße Verfahren bzw. die erfindungsgemäße Einrichtung mit besonderem Vorteil eingesetzt werden kann.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Es wird dargestellt in
- Fig. 1:: eine Venturi-Düse mit angeschlossener Druckmediumquelle;
- Fig. 2:: ein Sammelbehälter mit Venturi-Düse;
- Fig. 3:: ein Sammelbehälter mit einer Mehrzahl von Venturi-Düsen; und
- Fig. 4:: ein wasserstoffbetriebenes Fahrzeug.

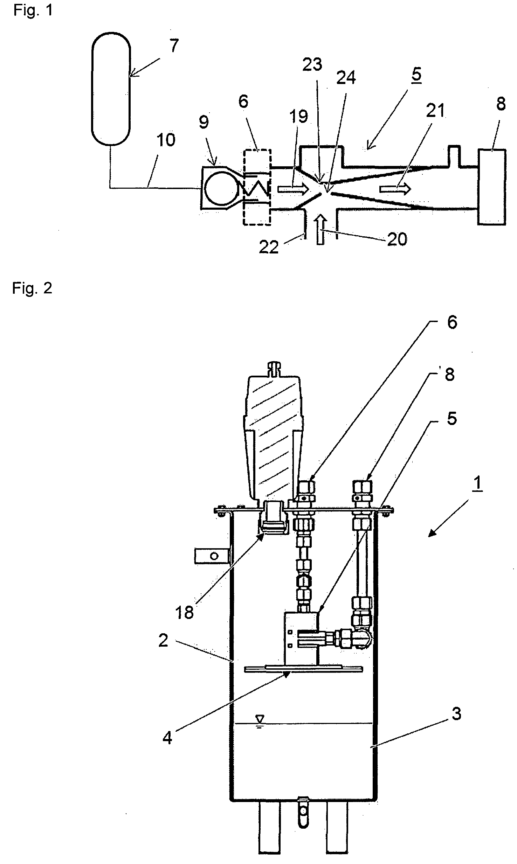

Fig. 1 zeigt eine Venturi-Düse 5, welche mit einer Druckmediumquelle 7 strömungsverbunden ist. Über einen Druckmediumeinlass 6 ist eine Druckmediumleitung 10 mittels eines pneumatischen Ventils 9, welches hier mittels einer schematisch dargestellten Federeinrichtung des Druckmediumeinlasses 6 geöffnet ist, verbunden. Somit tritt in diesem Zustand ein Druckmedium 19, insbesondere Druckluft, in die Venturi-Düse 5 ein. Die Venturi-Düse 5 weist einen Strömungskanal mit einer Engstelle 23 auf, wobei im Bereich der Engstelle 23 eine Saugöffnung 24 lateral in den Strömungskanal bzw. in die Venturi-Düse 5 einmündet. Infolge der Beschleunigung der Druckmediumströmung 19 durch die Engstelle 23 wird ein Unterdruck an der Saugöffnung 24 erzeugt. Dieser Unterdruck führt zu einer Flüssigkeitsströmung 20 einer abzusaugenden Flüssigkeit, welche insbesondere über die angeschlossene Saugleitung 22 sowie die Saugöffnung 24 in die Venturi-Düse 5 eintritt. Das Gemisch 21 aus dem Druckmedium und der abzusaugenden Flüssigkeit wird über einen Entnahmeauslass 8 aus der Venturi-Düse 5 bzw. dem Sammelbehälter 1 (vgl. Fig. 2) abgeführt.

In Fig. 2 ist ein erfindungsgemäßer Sammelbehälter 1 mit einer Venturi-Düse 5, insbesondere gemäß Figur 1, und mit einer Sammelkammer 2 gezeigt, in der sich eine abzusaugende Flüssigkeit 3 im Bodenbereich gesammelt hat. Die Flüssigkeit 3 ist unterhalb der Saugöffnung 4 angeordnet, so dass hier bei einem Entnahmevorgang ein (zumindest teilweises) Trockenlaufen vorliegt. Die Sammelkammer 2 ist hier geschlossen ausgeführt und weist einen Kondensateinlass 18 auf, durch den Kondensat, zum Beispiel Wasser, eintritt. Die Venturi-Düse 5 ist mit einem Druckmediumeinlass 6 strömungsverbunden, so dass über die Saugöffnung 4 die Flüssigkeit abführbar ist. Die Saugöffnung 4 ist mit dem Entnahmeauslass 8 strömungsverbunden, so dass das abgesaugte Kondensat-Druckmedium-Gemisch abführbar ist.

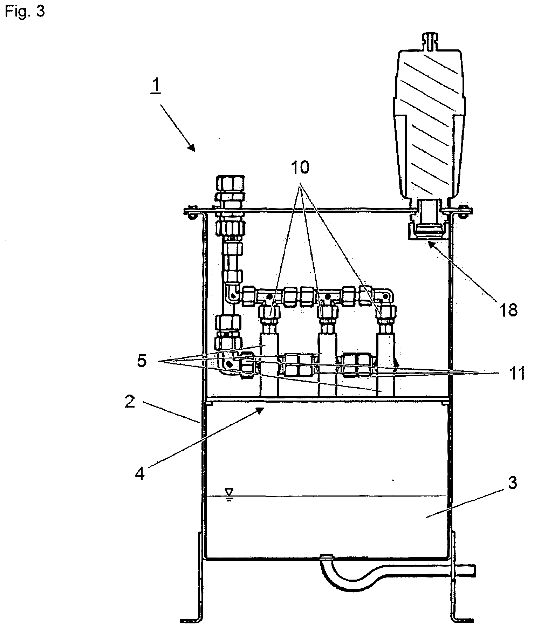

In Fig. 3 ist ein Sammelbehälter 1 mit drei Venturi-Düsen 5 und mit einer Sammelkammer 2 gezeigt. Bevorzugt ist dies eine um 90° gedrehte Ansicht des Sammelbehälters 1, wie in Fig. 2 dargestellt. Die Venturi-Düsen 5 sind hier parallel geschaltet und mit einer gemeinsamen Druckmediumleitung 10 verbunden, die auf die einzelnen Venturi-Düsen 5 verzweigt. Bevorzugt münden die Venturi-Düsen 5 dabei in eine gemeinsame Absaugleitung 11, über die das Kondensat zusammen mit dem Druckmedium abgeführt wird.

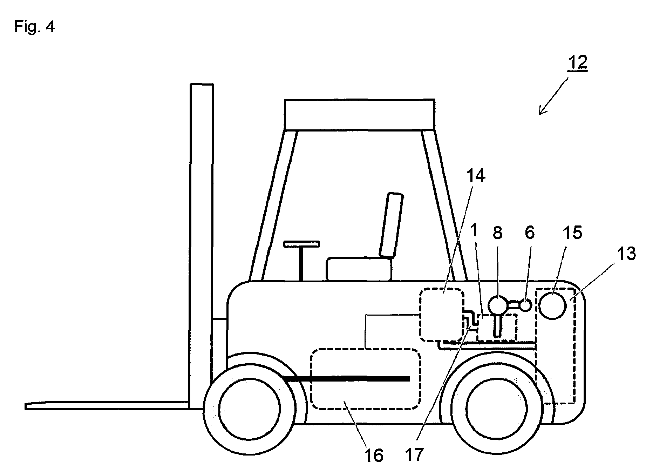

In Fig. 4 ist ein wasserstoff-betriebenes Fahrzeug 12, zum Beispiel hier ein Flurfördermittel in Form eines Gabelstaplers, gezeigt, welches einen Wasserstoffspeicher 13, einen Reaktor 14, zum Beispiel eine Brennstoffzelle, einen Sammelbehälter 1 und eine Antriebsmaschine 16 aufweist. Der Sammelbehälter 1 ist über eine Kondensatableitung 17 mit dem Reaktor 14 zur Aufnahme von erzeugtem Kondensat verbunden, und nach außen hin ist ein Wasserstoffanschluss 15, ein Druckmediumanschluss 6 und ein Entnahmeanschluss 8 gebildet.

Mit dem hier vorgeschlagenen Sammelbehälter und dem Verfahren zum Entleeren eines Sammelbehälters ist ein Abziehen von gesammeltem Kondensat möglich, welches einfach aufgebaut ist, einfach zu handhaben ist und mit Vorteil in einer Ex-Zone 0 einsetzbar ist.

**Bezugszeichenliste**

| | |
|---|---|
| 1 | Sammelbehälter |
| 2 | Sammelkammer |
| 3 | Flüssigkeit |
| 4 | Saugöffnung |
| 5 | Venturi-Düse |
| 6 | Druckmediumeinlass |
| 7 | Druckmediumquelle |
| 8 | Entnahmeauslass |
| 9 | pneumatisches Ventil |
| 10 | Druckmediumleitung |
| 11 | Absaugleitung |
| 12 | wasserstoff-betriebenes Fahrzeug |
| 13 | Wasserstoffspeicher |
| 14 | Reaktor |
| 15 | Wasserstoffanschluss |
| 16 | Antriebsmaschine |
| 17 | Kondensatableitung |
| 18 | Kondensateinlass |
| 19 | Druckgasströmung |
| 20 | Kondensatströmung |
| 21 | Entnahmeströmung |
| 22 | Saugleitung |
| 23 | Engstelle |
| 24 | Unterdrucköffnung |
| 25 | Druck-Kältetrockner |
| 26 | Nutzgas |
| 27 | Druck-Kältekammer |
| 28 | Nutzgaszuleitung |
| 29 | Nutzgasableitung |
| 30 | Kondensatableitung |
| 31 | Kondensatströmung |
| 32 | Kondensatsammler |

## Patentansprüche

1. Sammelbehälter (1), insbesondere für eine brandgefährdete und/oder explosionsgefährdete Umgebung, aufweisend zumindest die folgenden Komponenten:
- eine Sammelkammer (2) zur Aufnahme einer zu sammelnden Flüssigkeit (3) mit einem Kondensateinlass (18) für die Flüssigkeit (3); und
- eine Saugöffnung (4) zum Abführen der Flüssigkeit (3) aus der Sammelkammer (2),
**gekennzeichnet durch**
- eine Venturi-Düse (5), die in kommunizierender Strömungsverbindung mit der Saugöffnung (4) steht, so dass mittels der Venturi-Düse (5) ein Unterdruck in der Saugöffnung (4) erzeugbar ist;
- einen Druckmediumeinlass (6) für ein Druckmedium (7), der stromaufwärts der Venturi-Düse (5) angeordnet ist und in kommunizierender Strömungsverbindung mit der Venturi-Düse (5) steht, so dass ein Unterdruck in der Saugöffnung (4) erzeugbar ist, wenn ein Druckmedium (7) über den Druckmediumeinlass (6) **durch** die Venturi-Düse (5) gegeben wird; und
- einen Entnahmeauslass (8) stromabwärts der Venturi-Düse (5), der in kommunizierender Strömungsverbindung mit der Venturi-Düse (5) sowie mit der Saugöffnung (4) steht, so dass die Flüssigkeit (3) über den Entnahmeauslass (8) aus der Sammelkammer (2) abziehbar ist.

2. Sammelbehälter (1) nach Anspruch 1, **dadurch gekennzeichnet, dass** ein pneumatisches Ventil (9) zum Absperren des Druckmediumeinlasses (6) vorgesehen ist.

3. Verfahren zum Entleeren eines Sammelbehälters (1), insbesondere in einer brandgefährdeten und/oder explosionsgefährdeten Umgebung, **dadurch gekennzeichnet, dass** ein Druckmedium (7) über den Druckmediumeinlass (6) in die Venturi-Düse (5) eines Sammelbehälters (1) nach Anspruch 1 oder 2 eingeleitet wird, wobei die Flüssigkeit (3) aus dem Sammelbehälter (1) über die Saugöffnung (4) durch die Venturi-Düse (5) abgesaugt wird und zusammen mit dem Druckmedium über den Entnahmeauslass (8) abgeführt wird.

4. Verfahren nach Anspruch 3, **dadurch gekennzeichnet, dass** das Absaugen nach Erfüllen zumindest einer der folgenden Bedingungen beendet wird:
- Erreichen einer vorbestimmten Zeitdauer der Absaugung nach Beginn der Absaugung mittels der Venturi-Düse (5);
- Beendigung eines weiteren Vorgangs, bevorzugt eines Tankvorgangs; oder
- Erreichen einer vorbestimmten, abzuführenden Flüssigkeitsmenge;

5. Verfahren nach Anspruch 3 oder 4, **dadurch gekennzeichnet, dass** gleichzeitig zum Entleeren des Sammelbehälters (1) ein Wasserstoffspeicher (13), insbesondere ein mobiler Wasserstoffspeicher (13), insbesondere ein Wasserstoffspeicher (13) eines wasserstoffbetriebenen Fahrzeugs, mit Wasserstoff betankt wird.

6. Wasserstoffbetriebenes Fahrzeug (12), aufweisend zumindest die folgenden Komponenten:
- einen Wasserstoffspeicher (13);
- einen Reaktor (14), insbesondere in Form einer Brennstoffzelle, zum Erzeugen von Antriebsenergie für das Fahrzeug (12) unter Verwendung von Wasserstoff und Sauerstoff sowie unter Erzeugung von Wasser; und
- einen Sammelbehälter (1) für das erzeugte Wasser gemäß einem der Ansprüche 1 oder 2.
